(19) **Europäisches Patentamt**

**European Patent Office**

**Office européen des brevets**

(11) **EP 0 968 730 B1**

(12) **EUROPEAN PATENT SPECIFICATION**

(45) Date of publication and mention
of the grant of the patent:
**07.09.2005 Bulletin 2005/36**

(51) Int Cl.⁷: **A61M 1/18**, B01D 63/02

(21) Application number: **99110043.9**

(22) Date of filing: **21.05.1999**

(54) **Hollow fiber hemodialyzer**

Hohlfaserhämodialysator

Hémodialyseur à fibres creuses

(84) Designated Contracting States:
**BE DE FR GB IT LU NL**

(30) Priority: **25.05.1998 JP 14280998**
**17.05.1999 JP 13571399**

(43) Date of publication of application:
**05.01.2000 Bulletin 2000/01**

(73) Proprietor: **ASAHI MEDICAL Co., Ltd.**
**Tokyo (JP)**

(72) Inventor: **Hosoya, Noriyuki,**
**Terumo Kabushiki Kaisha**
**Ashigarakami-gun, Kanagawa (JP)**

(74) Representative: **TBK-Patent**
**Bavariaring 4-6**
**80336 München (DE)**

(56) References cited:
**EP-A- 0 282 355**     **EP-A- 0 787 523**
**EP-A- 0 841 086**     **US-A- 4 950 391**
**US-A- 5 230 862**

Remarks:
The file contains technical information submitted
after the application was filed and not included in this
specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

This invention relates to a hollow fiber hemodialyzer which is adapted for use in such therapies as hemodialysis and hemodiafiltration.

SUMMARY OF THE INVENTION

Since β2-microglobulin having a molecular weight of 11,800 Dalton has been found to be a uremic toxin, removal of low molecular weight proteins having a molecular weight in the range of from about 20,000 to about 40,000 has become an important issue in addition to the conventional removal of low and intermediate molecular weight substances. In view of such situation, hemodialysis membranes with higher performance have been developed by increasing the pore diameter of the membranes and by reducing the thickness of the active layer. As a consequence, the membranes exhibited a reduced resistance to mass transfer, and proportion of the mass transfer resistance on the dialysate phase increased in relation to the mass transfer resistance of the entire hemodialyzer.

In conventional hemodialyzers, number of the hollow fiber membranes and inner diameter of the housing have been empirically determined on the basis of the packing ratio of the hollow fibers. In the high performance hemodialyzers of today, however, design of the dialysate side flow path specifically adapted for the high performance membrane is required (Toshiyuki KANAMORI, et al., The Japanese Journal of Artificial Organs, 22(1), pages 64 to 69, 1993). Membranes of synthetic polymer suffer from the drawback of inferior segregation, and such membranes are likely to be non-uniformly dispersed in the housing compared to the cellulose-based membranes. When the hollow fibers are non-uniformly dispersed, channeling of the dialysate is likely to occur to detract from the mass removal performance. There is a strong demand for a hemodialyzer comprising hollow fiber membranes of a synthetic polymer wherein such drawbacks have been eliminated.

EP-A-0 841 086 discloses a fluid separation module used for fluid separation in which filaments are placed in the spaces between hollow fibre membranes. Especially, this document describes a gas separating module and does not disclose a hemodialyzer module in general.

US-A-4,950,391 discloses a dialyser in which threads are evenly distributed between capillaries in a bundle of capillaries. Especially, this document intends to improve the urea clearance by not making large spaces on the cross section of the bundle of capillaries and thus preventing nonuniform flow of dialysis.

EP-A-0 282 355 discloses a dialyzer having various ultrafiltration rates by using two kinds of hollow fibre membranes utilizing a standardized housing.

SUMMARY OF THE INVENTION

In view of such situation, an object of the present invention is to provide a hollow fiber hemodialyzer which has high mobility of the dialysate as well as excellent mass transfer performance.

According to the present invention, there is provided a hollow fiber hemodialyzer comprising a housing and hollow fiber membranes accommodated in the housing wherein blood flow path is defined in the interior of the hollow fibers and dialysate flow path is defined in the exterior of the hollow fibers, and said dialysate flow path has a hydraulic equivalent diameter from 50 to 165 μm.

The hydraulic equivalent diameter is preferably from 50 to 120 μm, more preferably in 55 to 120 μm, still more preferably 60 to 80 μm, and most preferably up to 70 μm.

The hollow fiber membranes may preferably comprise a synthetic polymer membrane such as polysulfone membrane, and the hollow fiber membrane may preferably comprise an active layer having pores with a diameter of 3.5 to 8.5 nm.

The hollow fiber hemodialyzer may preferably comprise at least two types of hollow fiber membranes each having different outer diameter. In addition, the hollow fiber hemodialyzer may preferably have spacer fibers in the dialysate flow path.

DETAILED DESCRIPTION OF THE INVENTION

Next, the hollow fiber hemodialyzer of the present invention is described in detail.

The hollow fiber hemodialyzer of the present invention comprises a housing and hollow fiber membranes accommodated in the housing, and the blood flow path is defined in the interior of the hollow fibers and dialysate flow path is defined in the exterior of the hollow fibers. The dialysate flow path has a hydraulic equivalent diameter from 50 to 165 μm.

In conventional hollow fiber hemodialyzers, the hydraulic equivalent diameter is in the range of about 180 to 350 μm. The hydraulic equivalent diameter of the present invention from 50 to 165 μm is significantly smaller than that of the conventional hollow fiber hemodialyzers.

The method for reducing the hydraulic equivalent diameter of the dialysate flow path with no significant change in the hollow fiber packing ratio (percentage of the sum of cross sectional areas of hollow fibers and interior spaces of hollow fibers in cross sectional area of the interior space of the housing) is not particularly limited, and exemplary such methods include (i) use of hollow fiber membranes having a reduced membrane thickness (in particular, a reduced thickness of the support layer) in combination with the use of a housing having reduced inner diameter; (ii) use of hollow fiber membranes having thicker membrane and hollow fiber membranes having thinner membrane in combination with the use of a housing having reduced inner diameter; and (iii) provision of spacer(s) in the dialysate flow path.

The inventors of the present invention have confirmed by experiments that the thickness of the hollow fibers (support layer thickness) can be reduced without significantly detracting from the mass transfer performance as will be described later.

The hydraulic equivalent diameter de [m] of the dialysate flow path is defined by the equation (1):

$$de = 4 \times (\text{cross sectional area of the dialysate flow path})/(\text{perimeter wetted with the dialysate})$$

$$= 4 \times \pi \times \{(Dh/2)^2 - N_1 \times (do_1/2)^2\} / \{\pi \times (Dh + N_1 \times do_1)\} \tag{1}$$

wherein

Dh is inner diameter of the housing [m],
$do_1$ is outer diameter of the hollow fiber membrane 1 [m], and
$N_1$ is number of hollow fiber membranes 1.

When the hollow fiber membrane 1 has a reduced thickness, the outer diameter $do_1$ of the hollow fiber membrane 1 is also reduced, and decrease in the inner diameter Dh of the housing is required to maintain the packing ratio of the hollow fibers at a constant value. The hydraulic equivalent diameter de calculated by the equation (1) will be reduced. Therefore, the method (i) for reducing the hydraulic equivalent diameter of the dialysate flow path as described above is effective.

The hydraulic equivalent diameter de [m] of the dialysate flow path of a hollow fiber hemodialyzer employing two different types of hollow fiber membranes each having different diameters is defined by the equation (2):

$$de = 4 \times (\text{cross sectional area of the dialysate flow path})/(\text{perimeter wetted with the dialysate})$$

$$= 4 \times \pi \times \{(Dh/2)^2 - N_1 \times (do_1/2)^2 - N_2 \times (do_2/2)^2\} / \{\pi \times (Dh + N_1 \times do_1 + N_2 \times do_2)\} \tag{2}$$

wherein

Dh is inner diameter of the housing [m],
$do_1$ is outer diameter of the hollow fiber membrane 1 [m],
$do_2$ is outer diameter of the hollow fiber membrane 2 [m],
$N_1$ is number of hollow fiber membranes 1, and
$N_2$ is number of hollow fiber membranes 2.

When the hollow fiber membrane 1 and the hollow fiber membrane 2 have equal inner diameter, and the hollow fiber membrane 2 has a thickness smaller than that of the hollow fiber membrane 1, the outer diameter $do_2$ of

the hollow fiber membrane 2 will be smaller the outer diameter $do_1$ of the hollow fiber membrane 1, and decrease in the inner diameter Dh of the housing is required to maintain the packing ratio of the hollow fibers at a constant value. The hydraulic equivalent diameter de calculated by the equation (2) will be reduced. Generally speaking, it is possible by enlarging the outer diameter of a hollow fiber membrane to increase the thickness of the active layer, the support layer and the inner diameter. If the outer diameter of a hollow fiber membrane of a hemodialyzer is increased, inner diameter Dh of the housing and the hydraulic equivalent diameter de[m] also will be increased in order to maintain the packing ratio of hollow fibers. But increasing the outer diameter of only some number of hollow fiber membranes, instead of all, will keep the hydraulic equivalent diameter de[m] within 165 μm to raise efficiency of the hemodialyzer with only small increase of inner diameter of the housing. Therefore, the method (ii) for reducing the hydraulic equivalent diameter of the dialysate flow path as described above is effective.

Next, the effectiveness the method (iii) in reducing the hydraulic equivalent diameter of the dialysate flow path is described.

The hydraulic equivalent diameter de [m] of the dialysate flow path of a hollow fiber hemodialyzer wherein spacer fibers are provided in the dialysate flow path (outside the hollow fiber membranes) is defined by the equation (3):

$$de = 4 \times (\text{cross sectional area of the dialysate flow path})/(\text{perimeter wetted with the dialysate})$$

$$= 4 \times \pi \times \{(Dh/2)^2 - N_1 \times (do_1/2)^2 - N_3 \times (do_3/2)^2\}/$$

$$\{\pi \times (Dh + N_1 \times do_1 + N_3 \times do_3)\} \tag{3}$$

wherein

Dh is inner diameter of the housing [m],
$do_1$ is outer diameter of the hollow fiber membrane 1 [m],
$do_3$ is outer diameter of the spacer fiber 3 [m],
$N_1$ is number of hollow fiber membranes 1, and
$N_3$ is number of the spacer fiber 3.

When the spacer fibers 3 are provided in the dialysate flow path, alteration in the inner diameter Dh of the housing is not required to maintain the packing ratio of the hollow fibers at a constant value, and as a consequence, the hydraulic equivalent diameter de calculated by the equation (3) will be reduced. Therefore, the method (iii) for reducing the hydraulic equivalent diameter of the dialysate flow path as described above is effective. The outer diameter of the spacer fiber is preferably 5 to 25 μm.

When the spacer fibers are braided with the hollow fibers, and the spacer fibers do not intersect at right angles with the cross section of the flow path and the cross section of the spacer fiber in the flow path cross section is an oblong; or when the spacer fibers are perpendicularly braided with the hollow fibers, the hydraulic equivalent diameter de [m] of the dialysate flow path of the hollow fiber hemodialyzer is defined by the equation (4):

$$de = 4 \times (\text{volume of the dialysate flow path})/(\text{perimeter surface area wetted with the dialysate})$$

$$= 4 \times \pi \times \{L \times (Dh/2)^2 - L \times N_1 \times (do_1/2)^2 - 1 \times N_3 \times (do_3/2)^2\}/$$

$$\{\pi \times (L \times Dh + L \times N_1 \times do_1 + 1 \times N_3 \times do_3)\} \tag{4}$$

wherein

Dh is inner diameter of the housing [m],
$do_1$ is outer diameter of the hollow fiber membrane 1 [m],

do$_3$ is outer diameter of the spacer fiber 3 [m],

L is effective length of the dialysate flow path,

N$_1$ is number of hollow fiber membranes 1, and

1 is effective length [m] of a spacer fiber in the dialysate flow path.

N$_3$ is number of the spacer fiber 3.

The hydraulic equivalent diameter of the dialysate flow path should be from 50 to 165 μm to realize a sufficient mass transfer performance. The hydraulic equivalent diameter, however, is preferably from 55 to 120 μm and more preferably up to 70 μm. To prevent folding of the hollow fiber and collapsing of the lumen due to the excessively small hydraulic equivalent diameter and to avoid the complication of the assembly procedure, the hydraulic equivalent diameter of the dialysate flow path is preferably in the range of 50 μm to 165 μm, more preferably in 55 μm to 120 μm, and still more preferably 60 μm to 80 μm.

The dialysis membrane used in the present invention is not critical and both cellulose based membranes and synthetic polymer membranes are adapted for use in the hollow fiber hemodialyzer of the present invention. Exemplary cellulose based membranes include membranes made from cellulose, cellulose derivatives such as cellulose diacetate, cellulose triacetate, and the like. Exemplary synthetic polymer membranes include membranes made from polysulfone, poly(methyl methacrylate), polyacrylonitrile, poly(ethylene vinyl alcohol), polyethersulfone, polyamide, carbonate-ethylene oxide copolymer, polyester polymer alloys, and the like.

Of these membranes, the preferred are the membranes made from synthetic polymers in spite of the drawbacks of the synthetic polymer hollow fiber membranes in general, namely, low strength and inferior dispersibility. As is well known in the art, when the hollow fiber membranes in the bundle of hollow fiber membranes are non-uniformly dispersed, flow of the dialysate will be non-uniform, and the hollow fiber membranes will not be effectively utilized to detract from dialysis efficiency. Even when such synthetic polymer membrane is used for the hemodialyzer, high dialysis efficiency is ensured when the hydraulic equivalent diameter of the dialysate flow path is reduced to 165 μm or less. In particular, excellent dialysate fluidity is realized when a spacer is employed since the spacer enhances the strength and dispersibility of the hollow fiber membranes.

The structure of the hollow fiber membrane is not critical although the hollow fiber membrane is preferably of the structure comprising an active layer (separation layer) on the interior side of the hollow fiber near the lumen and a support layer outside the active layer. The active layer has the pores which determine the permeability of the membrane, and the support layer has the pores with a larger diameter. The pore diameter of the active layer is preferably in the range of 3.5 to 8.5 nm.

Of the synthetic polymer membranes as described above, polysulfone membranes are most preferable in view of their high fractionating performance.

The packing ratio of the hollow fiber membranes in the hollow fiber hemodialyzer of the present invention is preferably in the range of 60 to 80%, and more preferably 60 to 70%. In the hollow fiber hemodialyzer of the present invention, the hydrauric equivalent diameter can be adjusted to the predetermined range by optional provision of the spacer as described below. When the packing ratio of the hollow fiber membrane is below the above described range, more spacers are required to realize the hydrauric equivalent diameter of the predetermined range, and a larger module will be required to obtain the area of the hollow fiber membrane required in the particular therapy. When the packing ratio of the hollow fiber membrane is beyond the above described range, insertion of the hollow fiber membrane bundle will be difficult, and pressure loss of the dialysate side will be unduly high.

When two or more types of hollow fiber membranes each having different outer diameter are used in the hollow fiber hemodialyzer of the present invention, difference in the membrane thickness between the thinnest and the thickest membranes is preferably at least 10 μm, and preferably in the range of 10 μm to 25 μm. When the difference in the membrane thickness is less than 10 μm, the merit of using the two or more different membranes that the hydrauric equivalent diameter can be reduced at a relatively low packing ratio is nullified. When the difference in the membrane thickness is more than 25 μm, the hollow membrane fibers of the thicker type will occupy an unduly increased space or the thinner hollow fiber membranes suffer from an insufficient strength.

The active layer of the hollow fiber membranes in the hollow fiber hemodialyzer of the present invention may preferably have a pore diameter in the range of 3.5 nm to 8.5 nm, and more preferably 4.0 nm to 7.5 nm as calculated by the distribution of the diameters of small pores obtained by the molecular weight cut-off curve of dextran. When the pore diameter is below such range, the membrane will suffer from an insufficient mass transfer performance and the merit of reducing the hydrauric equivalent diameter is not fully realized. On the other hand, the pore diameter is beyond such range will result in the increased leakage of the effective components such as albumin from the blood.

The measurement method of the pore diameter of the active layer of the hollow fiber membranes is described in the reference; The Japanese Journal of Artificial Organs, 21[3] (1992) Makoto, Saruhashi et al., pages 1015-1020.

The material used for fabricating the housing of the hollow fiber hemodialyzer of the present invention is not particularly limited, and exemplary materials include polycarbonate, polypropylene, polyethylene, polyethylene terephthalate, silicone, polyurethane, polyvinyl chloride, styrene-butadiene block copolymer resin, styrene resin, and the like.

The spacer used in the present invention may be in the form of a fiber, a sheet, a sponge, or the like.

The material used for fabricating the spacer is not particularly limited, and exemplary materials include polyester, tetrone, glass fiber, rayon, cupra, acetate, acetificated acetate, vinylon, nylon, vinylidene, acryl, polyurethane (including Spundex), cotton, wool, silk, polyvinyl chloride, polyurea, polyethylene, polypropylene, and the like.

As described above, the hydraulic equivalent diameter of the hollow fiber hemodialyzer of the present invention is smaller than that of the conventional hollow fiber hemodialyzers.

In hemodialysis and hemodiafiltration, flow rate of the dialysate per unit time is generally constant, and decrease in the hydrauric equivalent diameter results in the increase of the linear flow rate of the dialysate. As a consequence, concentration gradient between the dialysate phase and the blood phase of the substance contained in the blood will be increased to realize the increased mass transfer. The hollow fiber hemodialyzer of the present invention is thereby provided with excellent mass transfer performance.

Next, the present invention is described in further detail by referring to Examples of the present invention and Comparative Examples which by no means limit the scope of the present invention.

EXAMPLES

In Examples 1 to 5 and Comparative Example 1, the hollow fiber hemodialyzers were fabricated by using the materials as described below.

(1) Hollow fiber membrane

Hollow fiber membranes A and B were polysulfone membranes with the inner diameter of 200 µm.

    (1) Hollow fiber membrane A: thickness, 30 µm; pore diameter of the active layer, 5.5 nm.
    (2) Hollow fiber membrane B: thickness, 45 µm; pore diameter of the active layer, 5.5 nm.

Thickness of the active layer is the same in the hollow fiber membranes A and B. However, thickness of the support layer is different in the hollow fiber membranes A and B.

The hollow fiber membranes A and B were evaluated for their solute permeability for Vitamin $B_{12}$ ($VB_{12}$) ($PmVB_{12}$) using optical fibers in accordance with the procedure described in Yoshida, F. and Sakai, K., "Chemical Engineering and Artificial Organ", 2nd ed., 1997, Kyoritsu Shuppan, page 208. n was 10. The solute permeability for Vitamin $B_{12}$ ($PmVB_{12}$) of the hollow fiber membranes A and B were $4.41 \pm 0.31$ µm/s and $4.33 \pm 0.38$ µm/s, respectively, which can be regarded as substantially equivalent.

The results as described above reveal that thickness of the hollow fiber membrane (support layer) can be reduced with no substantial influence on the material transfer capacity of the hollow fiber membrane.

(2) Housing

Housings a, b, c were polycarbonate tubular housings having a dialysate inlet port and a dialysate outlet port. Their effective length was 0.235 m.

    (1) Housing a: inner diameter 0.0330 m
    (2) Housing b: inner diameter 0.0346 m
    (3) Housing c: inner diameter 0.0368 m

Example 1

A bundle of 10,000 hollow fiber membranes of hollow fiber membrane A (effective membrane area corresponding to 1.5 $m^2$) was inserted in the housing a.

Opposite ends of the hollow fiber membranes were fixed to the housing by introducing polyurethane potting agent into opposite ends of the housing, and curing the potting agent. Opposite ends of the hollow fiber membranes were then sliced to open the hollow fiber membranes. A cover having a blood inlet port and a cover having a blood outlet port were liquid tightly secured to opposite ends of the housing by fusing to complete the hollow fiber hemodialyzer.

Example 2

A hollow fiber hemodialyzer was produced by repeating the procedure of Example 1 except that a bundle of a uniform mixture of 6,000 hollow fiber membranes A and 4,000 hollow fiber membranes B (effective membrane area corresponding to 1.5 m$^2$) inserted in the housing b was used instead of the bundle of 10,000 hollow fiber membranes A inserted in the housing a.

Example 3

Spacer fibers (outer diameter, 7 μm) were mixed with 10,000 hollow fiber membranes B at a rate of 5 spacer fibers per 1 hollow fiber membrane B to prepare a bundle of spacer fiber/hollow fiber membrane mixture (effective membrane area corresponding to 1.5 m$^2$).
A hollow fiber hemodialyzer was produced by repeating the procedure of Example 1 except that the bundle of the spacer fiber/hollow fiber membrane mixture inserted in housing c was used instead of the bundle of 10,000 hollow fiber membranes A (effective membrane area corresponding to 1.5 m$^2$) inserted in the housing a.

Example 4

Spacer fibers (outer diameter, 12 μm) were mixed with 10,000 hollow fiber membranes B at a rate of 12 spacer fibers per 1 hollow fiber membrane B to prepare a bundle of spacer fiber/hollow fiber membrane mixture (effective membrane area corresponding to 1.5 m$^2$).
A hollow fiber hemodialyzer was produced by repeating the procedure of Example 1 except that the bundle of the spacer fiber/hollow fiber membrane mixture inserted in housing c was used instead of the bundle of 10,000 hollow fiber membranes A (effective membrane area corresponding to 1.5 m$^2$) inserted in the housing a.

Example 5

Spacer fibers (outer diameter, 21 μm) were mixed with 10,000 hollow fiber membranes B at a rate of 16 spacer fibers per 1 hollow fiber membrane B to prepare a bundle of spacer fiber/hollow fiber membrane mixture (effective membrane area corresponding to 1.5 m$^2$).
A hollow fiber hemodialyzer was produced by repeating the procedure of Example 1 except that the bundle of the spacer fiber/hollow fiber membrane mixture inserted in housing c was used instead of the bundle of 10,000 hollow fiber membranes A (effective membrane area corresponding to 1.5 m$^2$) inserted in the housing a.

Comparative Example 1

A hollow fiber hemodialyzer was produced by repeating the procedure of Example 1 except that a bundle of 10,000 hollow fiber membranes B (effective membrane area corresponding to 1.5 m$^2$) inserted in the housing c was used instead of the bundle of 10,000 hollow fiber membranes A (effective membrane area corresponding to 1.5 m$^2$) inserted in the housing a.
The hydraulic equivalent diameter and other data of the dialysate side flow path of the hollow fiber hemodialyzers as described above are shown in Table 1.
The hydraulic equivalent diameter of the dialysate side flow path was calculated by using equation (1) for Example 1 and Comparative Example 1, equation (2) for Example 2, and equation (3) for Examples 3 to 5.

Table 1

| | Ex. 1 | Ex.2 | | Ex.3 | Ex.4 | Ex.5 | Comp. Ex.1 |
|---|---|---|---|---|---|---|---|
| **Hollow fiber membrane** | | | | | | | |
| Inner diameter, μm | 200 | 200 | 200 | 200 | 200 | 200 | 200 |
| Membrane thickness, μm | 30 | 30 | 45 | 45 | 45 | 45 | 45 |
| Outer diameter, μm | 260 | 260 | 290 | 290 | 290 | 290 | 290 |
| Pm $VB_{12}$, μm/s, n = 10 | 4.41 ± 0.31 | 4.41 ± 0.31 | 4.33 ± 0.38 | 4.33 ± 0.38 | 4.33 ± 0.38 | 4.33 ± 0.38 | 4.33 ± 0.38 |
| **Hollow fiber hemodialyzer** | | | | | | | |
| Number of hollow fibers | 10,000 | 6,000 | 4,000 | 10,000 | 10,000 | 10,000 | 10,000 |
| Inner diameter of housing, m | 0.0330 | 0.0346 | | 0.0368 | 0.0368 | 0.0368 | 0.0368 |
| Packing ratio of the hollow fibers, % | 62 | 62 | | 62 | 62 | 62 | 62 |
| Spacer fiber | | | | | | | |
| Wet outer diameter, μm, | – | – | | 7 | 12 | 21 | – |
| Number (per 1 hollow fiber) | – | – | | 5 | 12 | 16 | – |
| Membrane area, $m^2$ | 1.5 | 1.5 | | 1.5 | 1.5 | 1.5 | 1.5 |
| Hydraulic equivalent diameter of dialysate side flow path, μm | 157 | 165 | | 155 | 113 | 70 | 175 |

EP 0 968 730 B1

Evaluation of Mass Transfer Performance

The dialyzers produced in Examples 1 to 5 and Comparative Example 1 were evaluated for their mass transfer performance in a dialysis experiment using $VB_{12}$ in accordance with the Criteria for Evaluating the Performance of Artificial Kidney of Japanese Society for Artificial Organs. A dialysate wherein $VB_{12}$ concentration is adjusted to 2 mg/dl was used for the solution on the blood side. Filtration flow rate was 15 ml/min.
Clearance CL [ml/min] was calculated by the equation (5) :

$$CL = (Q_{Bi} \times C_{Bi} - Q_{B0} \times C_{B0})/C_{Bi} \tag{5}$$

wherein C is concentration of $VB_{12}$ [mg/dl], Q is flow rate [ml/min], the suffix B means blood side, the suffix i means inlet side, and the suffix o means outlet side.
The results are shown in Table 2. As demonstrated in Table 2, the clearance was greatly different in the hemodialyzer of Examples 1 to 5 compared with the hemodialyzer of Comparative Example 1.

Table 2

|  | $VB_{12}$ Clearance (ml/min) (n=3) |
| --- | --- |
| Example 1 | $122 \pm 3$ |
| Example 2 | $118 \pm 2$ |
| Example 3 | $120 \pm 2$ |
| Example 4 | $127 \pm 3$ |
| Example 5 | $132 \pm 2$ |
| Comparative Example 1 | $110 \pm 3$ |

As described above, the hollow fiber hemodialyzer of the present invention has excellent mass transfer performance, and therefore, well adapted for use in therapies such as hemodialysis and hemodiafiltration.
A hollow fiber hemodialyzer which exhibits high mobility of the dialysate as well as excellent mass transfer performance is provided. In this hollow fiber hemodialyzer, the hollow fiber membranes are accommodated in the housing, and blood flow path is defined in the interior of the hollow fibers and dialysate flow path is defined in the exterior of the hollow fibers. The dialysate flow path has a hydraulic equivalent diameter from 50 to 165 µm.

**Claims**

1. A hollow fiber hemodialyzer comprising a housing and hollow fiber membranes accommodated in the housing wherein blood flow path is defined in the interior of the hollow fibers and dialysate flow path is defined in the exterior of the hollow fibers,
   **characterized in that**
   said dialysate flow path has a hydraulic equivalent diameter of 50 to 165 µm.

2. A hollow fiber hemodialyzer according to claim 1, wherein said hydraulic equivalent diameter is in the range of 55 to 120 µm.

3. A hollow fiber hemodialyzer according to claim 1 or 2, wherein said hydraulic equivalent diameter is in the range of 60 to 80 µm.

4. A hollow fiber hemodialyzer according to any one of claims 1 to 3, wherein said hollow fiber membranes comprise a synthetic polymer.

5. A hollow fiber hemodialyzer according to any one of claims 1 to 4, wherein said hollow fiber membrane has an active layer, and said active layer has a pore diameter of 3.5 to 8.5 nm.

6. A hollow fiber hemodialyzer according to any one of claims 1 to 5, wherein said hollow fiber membranes comprise at least two types of hollow fiber membranes each having different outer diameter.

7. A hollow fiber hemodialyzer according to any one of claims 1 to 6, wherein spacer fibers are provided in the dialysate flow path.

**Patentansprüche**

1. Hohlfaserhämodialysator mit einem Gehäuse und in dem Gehäuse angeordneten Hohlfasermembranen, wobei der Blutdurchflussweg in dem Inneren der Hohlfasern festgelegt ist und der Dialysatdurchflussweg in dem Äußeren der Hohlfasern festgelegt ist,
   **dadurch gekennzeichnet, dass**
   der Dialysatdurchflussweg einen hydraulisch äquivalenten Durchmesser von 50 bis 165 µm hat.

2. Hohlfaserhämodialysator nach Anspruch 1, wobei der hydraulisch äquivalente Durchmesser in dem Bereich von 55 bis 120 µm ist.

3. Hohlfaserhämodialysator nach Anspruch 1 oder 2, wobei der hydraulisch äquivalente Durchmesser in dem Bereich von 60 bis 80 µm ist.

4. Hohlfaserhämodialysator nach einem der Ansprüche 1 bis 3, wobei die Hohlfasermembranen ein synthetisches Polymer umfassen.

5. Hohlfaserhämodialysator nach einem der Ansprüche 1 bis 4, wobei die Hohlfasermembran eine aktive Schicht hat, und die aktive Schicht einen Porendurchmesser von 3,5 bis 8,5 nm hat.

6. Hohlfaserhämodialysator nach einem der Ansprüche 1 bis 5, wobei die Hohlfasermembranen wenigstens zwei Arten von Hohlfasermembranen umfassen, wobei jede einen unterschiedlichen äußeren Durchmesser hat.

7. Hohlfaserhämodialysator nach einem der Ansprüche 1 bis 6, wobei Abstandshalterfasern in dem Dialysatdurchflussweg vorgesehen sind.

**Revendications**

1. Hémodialyseur à fibres creuses comprenant un boîtier et des membranes à fibres creuses logées dans le boîtier dans lequel le circuit du sang est défini à l'intérieur des fibres creuses et le circuit du dialysat est défini à l'extérieur des fibres creuses,
   **caractérisé en ce que**
   ledit circuit du dialysat à un diamètre d'équivalent hydraulique de 50 à 165 µm.

2. Hémodialyseur à fibres creuses selon la revendication 1, dans lequel ledit diamètre d'équivalent hydraulique est compris entre 55 et 120 µm.

3. Hémodialyseur à fibres creuses selon la revendication 1 ou 2, dans lequel ledit diamètre d'équivalent hydraulique est compris entre 60 et 80 µm.

4. Hémodialyseur à fibres creuses selon l'une quelconque des revendications 1 à 3, dans lequel lesdites membranes à fibres creuses se composent d'un polymère synthétique.

5. Hémodialyseur à fibres creuses selon l'une quelconque des revendications 1 à 4, dans lequel ladite membrane à fibres creuses a une couche active, ladite couche active ayant un diamètre de pore compris entre 3,5 et 8,5 nm.

6. Hémodialyseur à fibres creuses selon l'une quelconque des revendications 1 à 5, dans lequel lesdites membranes à fibres creuses se composent au moins de deux types de membranes à fibres creuses chacune ayant différents diamètres extérieurs.

7. Hémodialyseur à fibres creuses selon l'une quelconque des revendications 1 à 6, dans lequel les fibres de l'espaceur sont fournies dans le circuit du dialysat.